Europäisches Patentamt

European Patent Office

Office européen des brevets

(11) Publication number: **0 289 331**
**A1**

# EUROPEAN PATENT APPLICATION

(21) Application number: **88303887.9**

(22) Date of filing: **28.04.88**

(51) Int. Cl.⁴: **G 02 F 1/29**

(30) Priority: **30.04.87 GB 8710241**

(43) Date of publication of application:
**02.11.88 Bulletin 88/44**

(84) Designated Contracting States:
**AT BE CH DE ES FR GB GR IT LI LU NL SE**

(71) Applicant: **BRITISH TELECOMMUNICATIONS public limited company**
**British Telecom Centre, 81 Newgate Street**
**London EC1A 7AJ (GB)**

(72) Inventor: **Mallinson, Stephen Andrew**
**25 Andros Close**
**Ipswich,Suffolk IP3 OSL (GB)**

(74) Representative: **Greenwood, John David et al**
**British Telecom Intellectual Property Unit 151 Gower Street**
**London WC1E 6BA (GB)**

(54) A variable optical coupler.

(57) A variable optical coupler includes two waveguides 1, 2 and an intermediate waveguide structure 3 positioned between the two waveguides 1, 2. A detector 5 monitors light output from the intermediate waveguide structure 3. In response to the detector 5 a parameter determining the refractive index of the intermediate waveguide 3, such as its thickness, is varied to control the coupling of light from one of the waveguides 1, 2 to the other via the intermediate waveguide structure 3. The coupling takes place between propogation modes of the two waveguides 1, 2 and a higher order propogation mode of the intermediate waveguide structure 3.

*Fig.1.*

# Description

## A Variable Optical Coupler

The present invention relates to optical couplers which couple light between two waveguides by means of an intermediate waveguide and in particular devices in which the characteristics of the intermediate waveguide may be varied to control the degree of coupling. Such devices find a wide range of applications in fields such as telecommunications.

Our previous European Patent Application No. 86310195.2 discloses an optical coupler in which the coupling between two waveguides is effected by an intermediate waveguide capable of sustaining a propagation mode of the same phase velocity as those in the two waveguides but of a higher order. The phase velocity within the intermediate waveguide depends on its effective refractive index which in turn depends upon such parameters as the thickness of the intermediate waveguide and the bulk refractive index. The phase velocity of the intermediate waveguide and hence the degree of coupling via the intermediate waveguide of the first and second waveguides can therefore be controlled by varying such parameters as the thickness of the intermediate waveguide. To optimise the control of the variable optical coupler it is desirable to monitor its output and to include feedback from the monitored output to control characteristics of the intermediate waveguide. However monitoring the output of the coupler inevitably absorbs some of the optical power transmitted through it and so increases its insertion loss which is undesirable.

According to this invention a variable optical coupler comprises two single mode waveguides, an intermediate waveguide structure positioned between the two waveguides, a detector to monitor light output from the intermediate waveguide structure, and means responsive to the detector to vary a parameter determining the effective refractive index of the intermediate waveguide structure to control coupling of a propagation mode of one of the two waveguides to a propagation mode of the other of the two waveguides via a single higher order propagation mode of the intermediate waveguide structure.

The intensity of the direct light output from the intermediate waveguide structure, which does not form part of the useful output of the optical coupler, has a clearly defined relationship to the output from the two waveguides. Monitoring the output from the intermediate waveguide structure therefore provides an indirect means of monitoring the output of the coupler and hence optimising its control. Since no direct detection of the output from the two waveguides is necessary this method of controlling the coupler avoids any degradation in the output of the coupler and does not result in increased insertion losses.

Preferably the means responsive to the detector include logic circuits arranged to determine values of the parameter corresponding to maximum and minimum coupling of the propagation modes of the two waveguides in response to the detection of a maximum in the light output from the intermediate waveguide structure. Alternatively the logic circuits may be arranged to determine values of the parameter corresponding to maximum and minium coupling of the propogation modes of the two waveguides in response to the detection of at least one minimum in the light output from the intermediate waveguide structure.

Preferably the intermediate waveguide structure comprises a substantially planar layer of material of a refractive index higher than the effective refractive index of the two waveguide structures and the detector comprises a photodiode positioned adjacent one edge of the substantially planar layer.

The coupler may include a secondary light source arranged to direct into the intermediate waveguide structure light of a secondary wavelength differing from that of light being propagated in one or both of the two waveguides, in which case the detector is chosen to be sensitive to light of the secondary wavelength.

In this case the characteristics of the intermediate waveguide structure may be chosen so that a maximum in the output of light of the secondary wavelength from the intermediate waveguide structure occurs either when there is maximum coupling or when there is minimum coupling of the propagation modes of the two waveguides.

A device in accordance with the present invention is now described in detail with reference to the accompanying drawings, in which:-

Figure 1 is a side elevation of a device in accordance with the present invention;

Figure 2 is a graph illustrating the variation with thickness of the propagation constant $\beta$ of the intermediate waveguide structure of a device in accordance with the present invention;

Figure 3 is a graph illustrating the variation with the thickness of the intermediate waveguide structure of the optical outputs of a device in accordance with the present invention;

Figure 4 is a diagram illustrating different states of a device in accordance with the present invention;

Figure 5 is a side elevation of an alternative embodiment of the present invention; and

Figure 6 is a diagram illustrating an operational state of an alternative embodiment of the present invention.

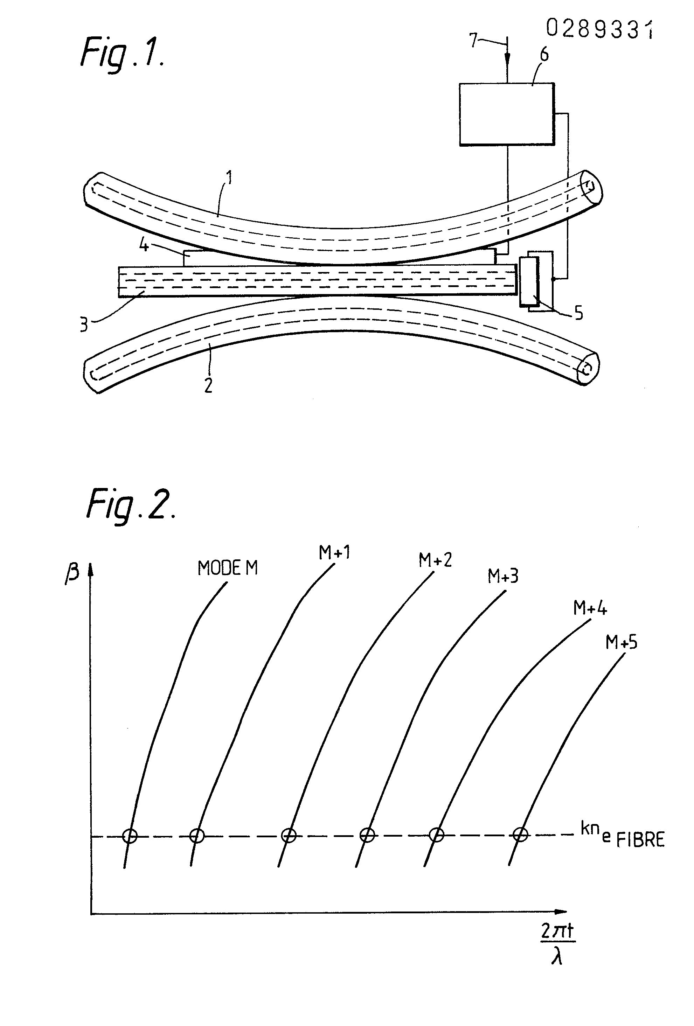

As shown in Figure 1 of the drawings a variable optical coupler in accordance with the present invention comprises two single mode fibre waveguides 1 and 2 and an intermediate waveguide structure positioned between the fibre waveguides 1, 2 formed by a thin film 3. The fibre waveguides 1, 2 are incorporated in half-coupler structures of the type described, for example, by B. Nayar "Int Optics", editors Nolting and Ulrich, Springer Series in Opt. Sci., vol 48, Springer Verlag 1985. (The polished fibre blocks of each optical half-coupler are omitted from Figure 1 for clarity). A piezo-electric element 4 is positioned adjacent one surface of the thin film 3. A photodiode 5 is positioned adjacent the edge of the thin film 3 at the output side of the coupler. Signals from the photodiode 5 are communicated to a control circuit 6 which is in turn connected to the piezo-electric element 4. A command line 7 provides further inputs to the control circuit 6.

The optical fibres 1, 2 are standard British Telecom type "B" single mode fibres. Each fibre is held by its respective half-coupler in a curved configuration with a radius of fibre curvature of 250 mm . Each fibre 1, 2 has its cladding removed by polishing to within 1 micron of its core and has an effective refractive index of approximately 1.45 at a wavelength of nominally 1.5 microns. (The effective refractive index $n_e$ is understood to be the ratio of the speed of light in vacuo c to the phase velocity $v_p$ of the guided mode concerned as opposed to the refractive index n, the bulk refractive index of the material as determined, for example, by means of an Abbé refractometer).

The thin film 3 is formed of methyl salycilate and has a refractive index n of approximately 1.52, a difference of approximately 5% as compared with the fibres. The film 3 has a typical thickness of 40 microns but this thickness may be varied by the action of the piezo-electric element 4 on the upper surface of the film 3. The propagation mode in the film 3 at a wavelength of 1.5 microns is found to be of order 24 as compared to the fundamental mode (m = 0) of the single mode optical fibres 1, 2.

Figure 2 shows the variation of the propagation constant $\beta$ of the film 3 with the normalised thickness of the film, $2\pi t/\lambda$ (t the physical thickness of the film, $\lambda$ the wavelength of the light being propogated). The propagation constant $\beta$, which is equal to $kn_{e\ film}$, where k is a constant and $n_{efilm}$ the film's effective refractive index, is found to increase rapidly with increasing film thickness for a particular propagation mode. Different modes m, m + 1,... are seen as the wavelength $\lambda$ of the light being propagated changes. As can be seen from the graph $kn_e$ for the fibres remains substantially constant for the one fundamental propagation mode present in each fibre over a large range of wavelengths. Where the line $\beta = kn_{e\ fibre}$ intersects the lines for each propogation mode of the film the condition,

$$n_{e\ fibre} = n_{e\ film}$$

is satisfied. When this occurs optical energy input through one fibre 1, 2 is cross coupled to and output from the other fibre 1, 2. If the thickness of the film 3 and hence its effective refractive index is changed by means of the piezo-electric element 4 there is then a rapid decrease in the degree of cross-coupling via the film 3 until a "straight-through" condition is reached in which substantially all of the power input into one fibre 1, 2 is output from the same fibre 1, 2 without any cross coupling to the other fibre 1, 2.

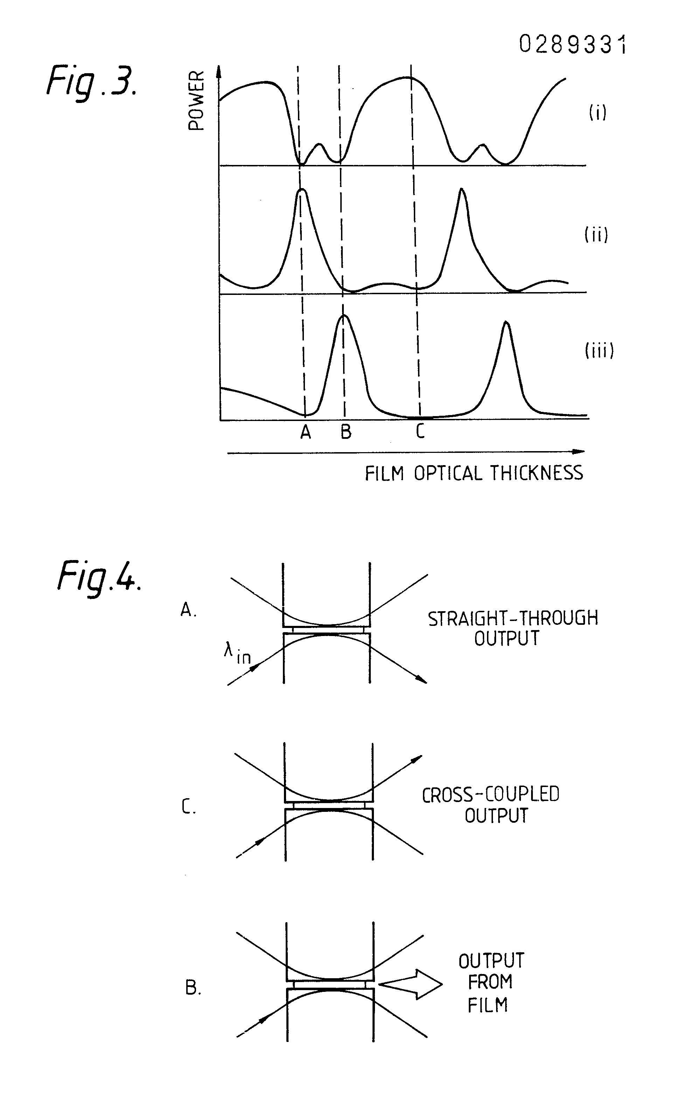

It is found that as the thickness of the film 3 is varied to take the coupler between the "cross-coupled" and "straight-through" conditions an intermediate state is encountered in which substantially all of the optical power input to the coupler is output from the film 3. Figures 3i, 3ii and 3iii show the optical power output from the fibre 1, the fibre 2 and the film 3 respectively as a function of film optical thickness. The straight-through, intermediate and cross-coupled conditions are marked as points A, B, and C respectively and are also illustrated diagrammatically in Figure 4. As shown in the graphs it is found that there is a clearly defined relationship between the output from the film 3 and the output from the optical fibres 1, 2. Detecting the output from the film 3 therefore provides a means of supplying feedback to the control circuit 6 without degrading the performance of the coupler by inserting detectors directly in the output from the fibres 1, 2. In particular it is found that the point B at which the output from the film 3 is at a maximum has a substantially uniform and predictable relationship to the points A and C corresponding to the straight-through and cross-coupled conditions. It is therefore possible for suitably programmed logic circuits within the control circuit 6 by detecting when the intermediate condition B is reached to calculate appropriate values for the control signals to the piezo-electric element 4 to switch the coupler with precision to the straight-through or cross-coupled condition. The switching between these two conditions is effected in response to a command signal received by the control circuit 6 via the command line 7.

Although the control process described relies upon detection of a maximum in the output from the film alternative processes in which, for example, minima in the output are detected are equally possible. Equally alternative methods of varying the characteristics of the intermediate waveguide structure may be used. For example, if a liquid crystal film is used its refractive index may be varied by the application of an electric field.

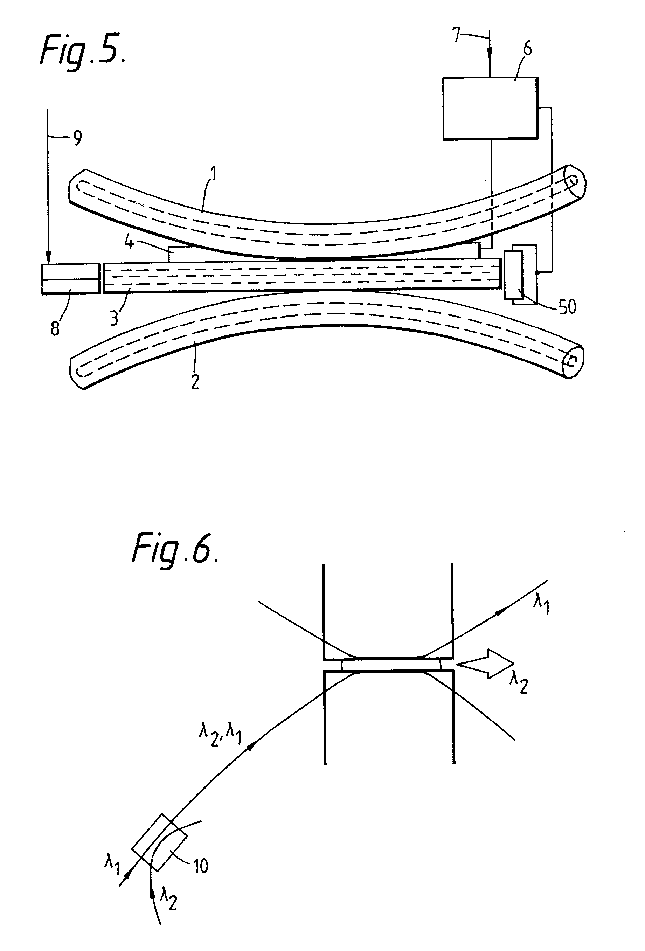

In an alternative embodiment of the present invention a secondary light source is used for monitoring the state of the coupler. As shown in Figure 5, a semiconductor laser 8 is positioned adjacent the edge of the film 3 at the input side of the coupler. The laser 8 outputs light at a secondary wavelength $\lambda_2$ significantly lower than the wavelength $\lambda_1$ of the light being coupled between the two fibres 1, 2. A detector 50 is positioned adjacent an opposing edge of the film at the output side of the coupler. The detector 50 is sensitive to light at the secondary wavelength but does not respond at the primary wavelength. In practice substantially 700 nm is found to be a convenient value for the secondary wavelength, enabling the use of an inexpensive diode laser as the secondary source and a silicon detector 50.

In an alternative configuration shown diagrammatically in Figure 6 a frequency selective coupler 10 is used to introduce the secondary wavelength $\lambda_2$ via one of the two fibres 1, 2.

As before there is found to be a predictable relationship between the output from the film 3 measured by the detector 50 and the output from the two fibres 1, 2 so that the detector may be used to provide feedback to control the operation of the variable optical coupler. The use of significantly different primary and secondary wavelengths ensures that there is no interference between the primary and secondary systems. Moreover by the use of a suitably dimensioned film it is possible to arrange for the maximum in the output from the film at the secondary wavelength to coincide precisely with either the "straight-through" or "cross-coupled" state of the coupler. This simple relationship between the output from the film and the state of the coupler facilitates "real time" control of the coupler without the use of complex logic circuits.

**Claims**

1. A variable optical coupler comprising two single mode waveguides, an intermediate waveguide structure positioned between the two waveguides, a detector to monitor light output from the intermediate waveguide structure, and means responsive to the detector to vary a parameter determining the effective refractive index of the intermediate waveguide structure to control coupling of a propagation mode of one of the two waveguides to a propagation mode of the other of the two waveguides via a single higher order propagation mode of the intermediate waveguide structure.

2. A coupler according to Claim 1 further comprising a secondary light source arranged to direct into the intermediate waveguide structure light of a secondary wavelength differing from that of light being propagated in one or both of the two single mode waveguides, and in which the detector is chosen to be sensitive to light of the secondary wavelength.

3. A coupler according to Claim 1 or 2, in which the means responsive to the detector include logic circuits arranged to determine values of the parameter corresponding to maximum and minimum coupling of the propagation modes of the two waveguides in response to the detection of a maximum in the light output from the intermediate waveguide structure.

4. A coupler according to Claim 1 or 2, in which the means responsive to the detector include logic circuits arranged to determine values of the parameter corresponding to maximum and minimum coupling of the propogation modes of the two waveguides in response to the detection of at least one minimum in the light output from the intermediate waveguide structure.

5. A coupler according to any one of the preceding Claims, in which the intermediate waveguide structure comprises a substantially planar layer of material of a refractive index higher than the effective refractive index of the two waveguide structures and the detector comprises a photodiode positioned adjacent one edge of the substantially planar layer.

6. A coupler according to Claim 5, in which the means responsive to the detector include a piezo-electric element positioned adjacent a planar surface of the intermediate waveguide and arranged to vary the thickness of the intermediate waveguide.

7. A variable optical coupler substantially as described with reference to the accompanying drawings.

0289331

## Fig.1.

## Fig.2.

0289331

**Fig.3.**

(i)

(ii)

(iii)

A   B   C

FILM OPTICAL THICKNESS

**Fig.4.**

A.

$\lambda_{in}$

STRAIGHT-THROUGH
OUTPUT

C.

CROSS-COUPLED
OUTPUT

B.

OUTPUT
FROM
FILM

*Fig.5.*

*Fig.6.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 026 632 (K.O. HILL et al.) * Abstract; figures 1-8 * | 1,5,7 | G 02 F 1/29 |
| A | EP-A-0 112 732 (THOMSON-CSF) * Abstract; figure 6 * | 1,5,7 | |
| A | APPLIED PHYSICS LETTERS, vol. 46, no. 4, February 1985, pages 338-340, American Institute of Physics, New York, US; E.S. GOLDBURT et al.: "Nonlinear single-mode fiber coupler using liquid crystals" * Abstract; figures 1,2 * | 1,7 | |
| A | US-A-4 013 000 (H.W. KOGELNIK) * Abstract; figure 2 * | 6,7 | |

TECHNICAL FIELDS SEARCHED (Int. Cl.4)

G 02 F

The present search report has been drawn up for all claims

| Place of search | Date of completion of the search | Examiner |
|---|---|---|
| THE HAGUE | 25-07-1988 | MALIC K. |